(19) Europäisches Patentamt
European Patent Office
Office européen des brevets

(11) **EP 2 565 578 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(51) Int Cl.:
*G01B 9/02* *(2006.01)*     *G01B 11/14* *(2006.01)*

(21) Anmeldenummer: **12177860.9**

(22) Anmeldetag: **25.07.2012**

(54) **Vorrichtung zur interferometrischen Abstandsbestimmung zwischen zwei parallelen Platten**

Device for interferometric distance measurement between two parallel plates

Dispositif interférométrique de détermination de distance entre deux plaques parallèles

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2011 DE 102011111900**

(43) Veröffentlichungstag der Anmeldung:
**06.03.2013 Patentblatt 2013/10**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**EP-A2- 1 762 828**     **EP-A2- 2 085 752**
**DE-A1-102007 016 774**

**Beschreibung**

Die vorliegende Erfindung betrifft eine Vorrichtung zur interferometrischen Abstandsbestimmung zwischen zwei weitgehend parallel angeordneten Platten.

Neben der Erfassung von Positionsänderungen zweier zueinander beweglicher Objekte in einer lateralen Richtung gibt es Messaufgaben, bei denen ausschließlich oder ggf. zusätzlich noch die Bestimmung des Abstands dieser Objekte in einer hierzu senkrechten, vertikalen Richtung erforderlich ist. Beispielsweise kann es sich hierbei um die Bestimmung des Abstands zwischen zwei weitgehend parallel zueinander angeordneten Platten handeln, wobei diese Platten lediglich einen geringen Abstand zueinander aufweisen. Für eine hochgenaue Abstandsmessung bieten sich hierbei interferometrische Verfahren an, wie sie etwa in der DE 10 2007 016 774 A1 oder in der US 4,606,638 offenbart sind.

Die aus der DE 10 2007 016 774 A1 bekannte Vorrichtung zur interferometrischen Abstandsbestimmung umfasst eine auf einer Glasplatte angeordnete Strahler-Empfänger-Einheit, die in einem zu ermittelnden Abstand von einem Objekt platziert ist, wobei am Objekt ein Spiegel angeordnet ist. Auf der Glasplatte sind Aufspaltgitter angeordnet, die das von der Lichtquelle emittierte Strahlenbündel in mindestens ein Messstrahlenbündel und mindestens ein Referenzstrahlenbündel aufspalten. Das Messstrahlenbündel propagiert in Richtung des Spiegels am Objekt und wird darüber in Richtung der Strahler-Empfänger-Einheit zurückreflektiert; das Referenzstrahlenbündel propagiert ausschließlich in der Glasplatte und gelangt nach mehreren Reflexionen in der Strahler-Empfänger-Einheit zur interferierenden Überlagerung mit dem Messstrahlenbündel. Aus den derart gewonnenen Interferenzsignalen lässt sich in bekannter Art und Weise der Abstand zwischen der Glasplatte und dem Objekt bzw. die Abstandsänderungen zwischen diesen Komponenten ermitteln. Nachteilig an der bekannten Vorrichtung aus der DE 10 2007 016 774 A1 ist jedoch, dass im Fall von Verkippungen zwischen der Glasplatte und dem Spiegel fehlerhafte Abstandssignale resultieren.

Die aus der US 4,606,638 bekannte Vorrichtung basiert auf einem sog. Fizeau-Interferometer, mit dem der Abstand zwischen zwei parallelen Platten über ein interferometrisches Verfahren hochgenau bestimmbar ist. Auch in diesem Fall ist für eine präzise Abstandsbestimmung jedoch wesentlich, dass die beiden Platten sehr genau parallel zueinander ausgerichtet sind, andernfalls resultiert ein starker Signalabfall. Die Anbau- und Betriebstoleranzen sind somit auch für diese bekannte Vorrichtung zur interferometrischen Abstandsbestimmung äußerst klein. Darüberhinaus ist bei einem Fizeau-Interferometer durch die unvermeidlichen Mehrfachinterferenzen die Messgenauigkeit sehr beschränkt.

Aus der EP 1 762 828 A2 ist eine Positionsmesseinrichtung zur Erfassung der Position von zwei relativ zueinander beweglichen Objekten bekannt. Das hierbei vorgesehene Abtastsystem ist derart ausgebildet, dass darüber eine gleichzeitige Positionswertbestimmung entlang mindestens einer lateralen als auch entlang einer vertikalen Verschiebungsrichtung der Objekte möglich ist.

Die EP 2 085 752 A2 offenbart eine optische Positionsmesseinrichtung zur Erzeugung mehrerer phasenverschobener, verschiebungsabhängiger Inkrementalsignale bezüglich zweier in einer Messrichtung zueinander beweglicher Objekte. Das hierbei vorgesehene Abtastgitter besteht aus mehreren Blöcken, die jeweils eine Ablenkung der diese durchlaufenden Strahlenbündel in unterschiedliche Raumrichtungen bewirken.

Der vorliegenden Erfindung liegt das Problem zugrunde, eine Vorrichtung zur hochgenauen interferometrischen Abstandsbestimmung zwischen zwei weitgehend parallel angeordneten Platten schaffen, die möglichst große Anbau- und Betriebstoleranzen aufweist, also insbesondere unempfindlich gegenüber eventuellen Verkippungen der beiden Platten ist.

Diese Aufgabe wird erfindungsgemäß durch eine Vorrichtung mit den Merkmalen des Anspruchs 1 gelöst.

Vorteilhafte Ausführungen der erfindungsgemäßen Vorrichtung ergeben sich aus den Maßnahmen in den abhängigen Ansprüchen.

Die erfindungsgemäße Vorrichtung zur interferometrischen Abstandsbestimmung zwischen zwei weitgehend parallel angeordneten Platten umfasst eine Lichtquelle, mindestens ein Strahlteilerelement, mindestens ein Reflektorelement, mehrere Ablenkelemente, mehrere Retroreflektoren und einer Detektionseinheit. Hierbei trifft ein von der Lichtquelle emittiertes Strahlenbündel geneigt auf ein Strahlteilerelement auf der ersten Platte auf und erfährt dort eine Aufteilung in ein reflektiertes Referenzstrahlenbündel und ein transmittiertes Messstrahlenbündel. Das Messstrahlenbündel trifft auf ein Reflektorelement auf der zweiten Platte auf und erfährt dort eine erste Rückreflexion in Richtung der ersten Platte. Das Referenzstrahlenbündel durchläuft ein erstes Ablenkelement, das Messstrahlenbündel ein zweites Ablenkelement; anschließend durchlaufen das Referenz- und Messstrahlenbündel jeweils einen zugeordneten Retroreflektor; dann durchläuft das Messstrahlenbündel ein drittes Ablenkelement und das Referenzstrahlenbündel ein viertes Ablenkelement durchläuft, wobei sowohl das erste und zweite Ablenkelement als auch das dritte und vierte Ablenkelement jeweils unterschiedliche Ablenkwirkungen auf die durchlaufenden Referenz- und Messstrahlenbündel ausüben. Das Referenzstrahlenbündel erfährt dann eine Reflexion an der ersten Platte und das Messstrahlenbündel dann eine zweite Rückreflexion an einem Reflektorelement der zweiten Platte, so dass das Messstrahlenbündel und das Referenzstrahlenbündel dann kollinear in Richtung der Detektionseinheit propagieren, wo aus den interferierenden Mess- und Referenzstrahlenbündeln mehrere phasenverschobene Abstandssignale erzeugbar sind.

In einer möglichen Ausführungsform umfassen die Retroreflektoren eine erste diffraktive Linse, ein Reflektorelement und eine zweite diffraktive Linse, wobei über die erste diffraktive Linse eine Fokussierung des darauf einfallenden Mess- oder Referenzstrahlenbündels auf das Reflektorelement und über die zweite diffraktive Linse eine Kollimation des vom Reflektorelement reflektierten, ausfallenden Mess- oder Referenzstrahlenbündels erfolgt.

Es ist hierbei möglich, dass die erste und zweite diffraktive Linse auf einer ersten Seite eines plattenförmigen, transparenten Trägerelements angeordnet sind und auf der gegenüberliegenden, zweiten Seite des Trägerelements das Reflektorelement angeordnet ist, dessen reflektierende Seite in Richtung der ersten Seite orientiert ist.

Desweiteren kann vorgesehen werden, dass

- das erste Ablenkelement und die erste diffraktive Linse und das vierte Ablenkelement und die zweite diffraktive Linse eines ersten Retroreflektors als erstes und viertes kombiniertes diffraktives Ablenk-Linsenelement ausgebildet sind und
- das zweite Ablenkelement und die erste diffraktive Linse und das dritte Ablenkelement und die zweite diffraktive Linse eines zweiten Retroreflektors als zweites und drittes kombiniertes diffraktives Ablenk-Linsenelement ausgebildet sind.

Gemäß einem weiteren Aspekt der vorliegenden Erfindung ist es möglich, dass die kombinierten diffraktiven Ablenk-Linsenelemente auf einer ersten Seite eines plattenförmigen, transparenten Trägerelements angeordnet sind und auf der gegenüberliegenden zweiten Seite des Trägerelements das Reflektorelement angeordnet ist, dessen reflektierende Seite in Richtung der ersten Seite orientiert ist.

In einer vorteilhaften Ausführungsform der erfindungsgemäßen Vorrichtung sind die optischen Weglängen des Mess- und Referenzstrahlenbündels in einer definierten Nennlage identisch.

Um dies zu erreichen, kann vorgesehen werden, dass zur Einstellung identischer optischer Weglängen die dem Mess- und Referenzstrahlenbündel jeweils zugeordneten Retroreflektoren unterschiedlich ausgebildet sind.

Mit Vorteil gilt für den Winkel, unter dem das von der Lichtquelle emittierte Strahlenbündel geneigt auf die erste Platte einfällt:

$$\tan(\Theta) > rS / zP,$$

mit:

$\Theta$ := Winkel gegen eine Senkrechte auf die erste Platte, unter dem das von der Lichtquelle emittierte Strahlenbündel auf die erste Platte einfällt
rS := Strahlradius der Lichtquelle
zP := Abstand der ersten und zweiten Platte

In einer möglichen Variante der erfindungsgemäßen Vorrichtung kann vorgesehen sein, dass die erste Platte als transparente Planplatte ausgebildet ist,

- auf dessen der Lichtquelle abgewandten Seite in einem räumlich begrenzten ersten Bereich als Strahlteilerelement eine planare Strahlteilerschicht angeordnet ist, auf den das von der Lichtquelle emittierte Strahlenbündel auftrifft und
- auf der gleichen Seite in einem räumlich begrenzten zweiten Bereich als weiteres Strahlteilerelement eine weitere planare Strahlteilerschicht angeordnet ist, auf den das Messstrahlenbündel nach der zweiten Rückreflexion am Reflektorelement der zweiten Platte auftrifft und auf den das Referenzstrahlenbündel nach dem Durchlaufen des vierten Ablenkelements auftrifft.

Ferner ist es möglich, dass die erste Platte auf der der Lichtquelle zugewandten Seite sowie auf der entgegengesetzten Seite außerhalb der Bereiche mit den Strahlteilerelementen eine Antireflexionsschicht aufweist und/oder eine Blende in dem Bereich aufweist, in dem die kollinear überlagerten Mess- und Referenzstrahlenbündel in Richtung der Detektionseinheit propagieren.

Darüberhinaus kann die zweite Platte als transparente Planplatte ausgebildet werden, auf dessen der Lichtquelle zugewandten Seite als Reflektorelemente planare Spiegelschichten angeordnet ist, deren reflektierende Seiten in Richtung der ersten Platte orientiert ist.

Es ist ferner möglich, ein System aufzubauen, bestehend aus einer erfindungsgemäßen Vorrichtung kombiniert mit einer optischen Positionsmesseinrichtung, die geeignet ist, eine Relativverschiebung der ersten und zweiten Platte parallel zu den Anordnungsebenen der beiden Platten zu erfassen.

Vorzugsweise fallen hierbei die Messpunkte der optischen Positionsmesseinrichtung und der Vorrichtung zur interferometrischen Abstandsbestimmung zusammen.

Als entscheidender Vorteil der erfindungsgemäßen Lösung ist deren große Unempfindlichkeit gegenüber eventuellen Verkippungen der beiden Platten zu erwähnen; daraus wiederum resultieren die gewünschten großen Anbau- und Betriebstoleranzen. Maßgeblich dafür verantwortlich ist das erfindungsgemäße Vorsehen einer Retroreflexion, worüber mindestens eines der zur Interferenz gelangenden Strahlenbündel ein zweites Mal von einer der beiden Platten reflektiert wird. Über die hierbei resultierende zweite Reflexion, etwa des Messstrahlenbündels, an einer Platte wird eine eventuelle Verkippung dieser Platte gegenüber der erforderlichen Parallelausrichtung optisch kompensiert und verursacht so keine Messfehler mehr.

Die erfindungsgemäße Vorrichtung erlaubt ferner die Nutzung von Mess- und Referenzstrahlenbündeln mit ausgedehnten Strahlquerschnitten. Die interferometrische Abstandsbestimmung wird auf diese Art und Weise unempfindlich gegenüber möglichen lokalen Defekten auf den beiden Platten, da ein Strahlenbündel mit großem Strahlquerschnitt die mittleren Oberflächeneigenschaften über eine entsprechend größere Fläche erfasst.

Die Mess- und Referenzstrahlenbündel fallen in der erfindungsgemäßen Vorrichtung stets geneigt auf die beiden Platten ein, deren Abstand zu bestimmen ist. Darüber ist sichergestellt, dass die mehrfach zwischen den beiden Platten hin und her reflektierten Strahlenbündel, die nicht zur Signalgewinnung beitragen, seitlich so stark abgelenkt werden, dass diese nicht mehr auf die Detektionseinheit treffen können. Die Signalqualität und Messgenauigkeit wird auf diese Art und Weise nochmals erhöht.

Auf Seiten der beiden Platten sind in der erfindungsgemäßen Vorrichtung lediglich homogene, planare Beschichtungen auf den beiden Platten als optisch funktionsrelevante Komponenten vorgesehen, d.h. insbesondere keine Gitterstrukturen. Im Fall einer lateralen Verschiebung der beiden Platten zueinander bleiben die resultierenden Abstandssignale daher weitestgehend konstant. Eine elektronische Signalkorrektur zur Minimierung eventueller Interpolationsfehler im Fall einer Lateralverschiebung der Platten gegeneinander ist daher für die Abstandssignale nicht erforderlich.

Die erfindungsgemäße Vorrichtung lässt sich darüberhinaus besonders vorteilhaft mit einer optischen Positionsmesseinrichtung zur Erfassung der Relativverschiebung der beiden Platten in lateraler Richtung zu einem Gesamt-System kombinieren.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

Es zeigt

Figur 1a     eine schematisierte Darstellung des Strahlengangs eines ersten Ausführungsbeispiels der erfindungsgemäßen Vorrichtung in einer ersten Ansicht;

Figur 1b     einen Teil des Strahlengangs des ersten Ausführungsbeispiels in einer zweiten Ansicht;

Figur 2     eine Draufsicht auf die Oberseite der Abtastplatte aus dem ersten Ausführungsbeispiel;

Figur 3     eine schematisierte Darstellung einer Komponente der erfindungsgemäßen Vorrichtung;

Figur 4a     eine schematisierte Darstellung des Strahlengangs eines zweiten Ausführungsbeispiels der erfindungsgemäßen Vorrichtung in einer ersten Ansicht;

Figur 4b     einen Teil des Strahlengangs des zweiten Ausführungsbeispiels in einer zweiten Ansicht;

Figur 5     eine Draufsicht auf die Oberseite der Abtastplatte aus dem zweiten Ausführungsbeispiel;

Figur 6a     eine Draufsicht auf die Oberseite der ersten Platte aus dem zweiten Ausführungsbeispiel;

Figur 6b     eine Draufsicht auf die Unterseite der zweiten Platte aus dem zweiten Ausführungsbeispiel.

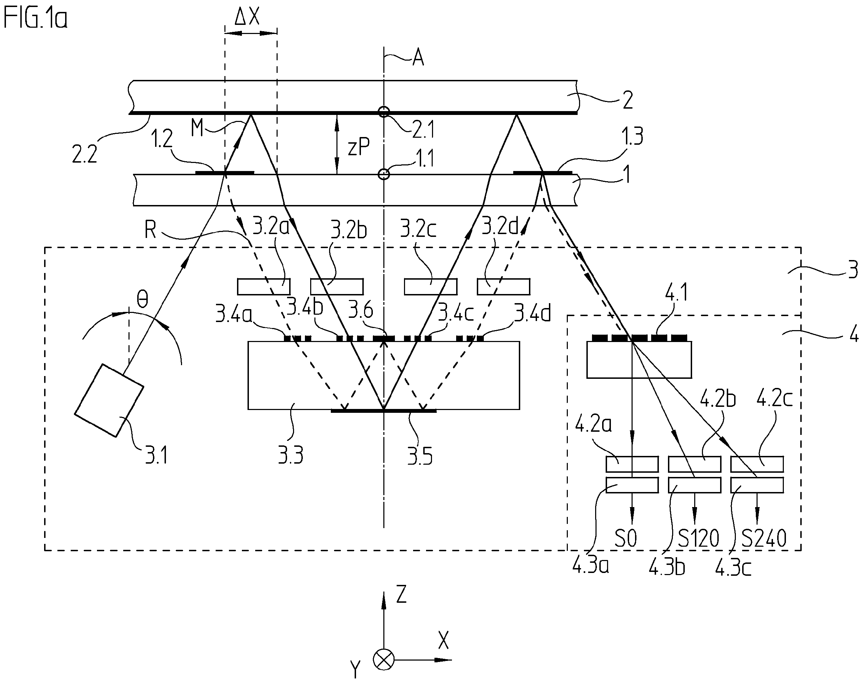

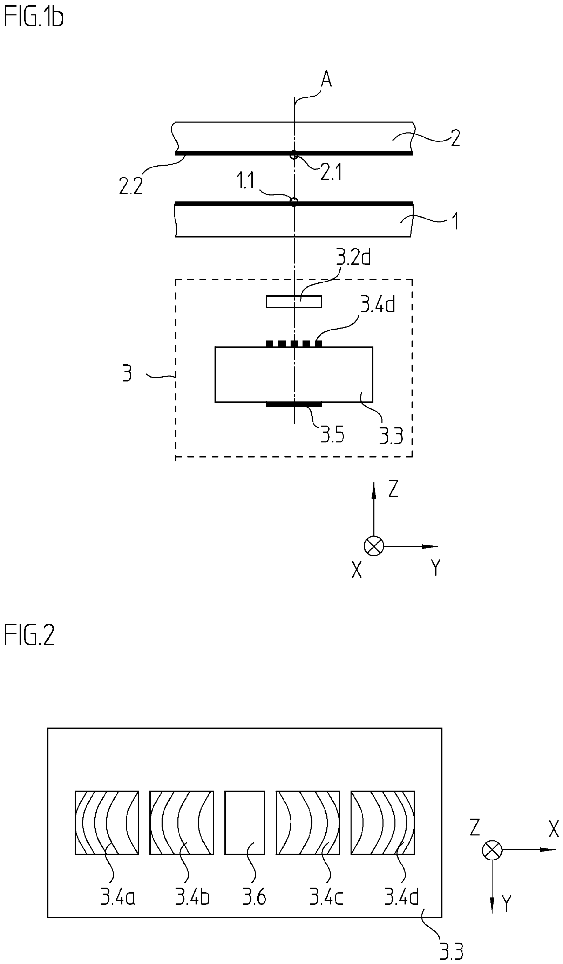

Anhand der Figuren 1a, 1b und 2 wird nunmehr ein erstes Ausführungsbeispiel der erfindungsgemäßen Vorrichtung erläutert. Die Figuren 1a, 1b zeigen hierbei in schematisierter Form den Strahlengang dieses Ausführungsbeispiels bzw. Teile hiervon in verschiedenen Ansichten, Figur 2 eine Draufsicht auf die Oberseite der Abtastplatte dieser Vorrichtung.

Mit Hilfe der erfindungsgemäßen Vorrichtung ist die interferometrische Bestimmung des Abstands $z_P$ zwischen zwei weitgehend parallel angeordneten Platten 1, 2 mit hoher Genauigkeit möglich. Bei den beiden Platten 1, 2 handelt es sich etwa um zwei Planplatten aus Glas, die beispielsweise in einer optischen Positionsmesseinrichtung angeordnet und in der lateralen xy-Ebene in ein oder zwei Richtungen relativ zueinander beweglich sind. Das System, bestehend aus der optischen Positionsmesseinrichtung und der erfindungsgemäßen Vorrichtung zur interferometrischen Abstandsbestimmung, ist in einer Maschine angeordnet, und dient zur Erzeugung von hochgenauen Positionsinformationen für eine Maschinensteuerung bzgl. relativ zueinander beweglicher Maschinenkomponenten, die mit den beiden Platten 1, 2 verbunden sind. Über die optische Positionsmesseinrichtung ist die Positionserfassung in der xy-Ebene möglich. Hierzu sind auf den beiden Platten 1, 2 im Bereich der Orte 1.1, 2.1 - in den Figuren nicht dargestellte - Maßverkörperungen in Form von Gitterstrukturen angeordnet, um über eine optische Abtastung derselbigen Positionsinformationen bzgl. der Verschiebung der Platten 1, 2 zueinander in der lateralen xy-Ebene zu erzeugen; neben der Maßverkörperung umfasst die entsprechende optische Positionsmesseinrichtung noch einen - ebenfalls nicht dargestellten - Abtastkopf, der z.B. in der Abtasteinheit 3 der erfindungsgemäßen Vorrichtung angeordnet ist. Geeignete Abtastoptiken bzw. geeignete optische Positionsmesseinrichtungen sind etwa aus der DE 10 2010 043 263 der Anmelderin bekannt. Aus den Positionsinformationen zur Verschiebung der Platten 1, 2 in der xy-Ebene und dem mittels der erfindungsgemäßen Vorrichtung bestimmten vertikalen Abstand $z_P$ der beiden Platten 1, 2 entlang der z-Richtung lässt sich die räumliche Lage der beiden Platten 1, 2 in sechs Freiheitsgraden hochgenau bestimmen. Diese Information wiederum kann z.B. genutzt werden, in der Maschine, in der das System aus optischer Positionsmesseinrichtung und erfindungsgemäßer Vorrichtung angeordnet ist, die räumliche Position der relativ zueinander beweglichen Maschinenteile hochgenau zu bestimmen und dabei etwa auch sog. Abbe-Fehler in der Positionsbestimmung zu korrigieren. Auf weitere vorteilhafte Details des Systems aus erfindungsgemäßer Vorrichtung und optischer Positionsmesseinrichtung wird im Verlauf der folgenden Beschreibung noch näher eingegangen.

Im dargestellten ersten Ausführungsbeispiel der erfindungsgemäßen Vorrichtung zur interferometrischen Abstandsbestimmung sind die verschiedenen Komponenten der Vorrichtung in einer Abtasteinheit 3 angeordnet, die in z-Richtung beabstandet von den beiden Platten 1, 2 platziert ist.

Selbstverständlich ist die Anordnung aller Komponenten in einer einzigen, gemeinsamen Abtasteinheit nicht zwingend erforderlich; denkbar wäre etwa auch, z.B. die Lichtquelle 3.1 und/oder die Detektionseinheit 4 bzw. Teile davon räumlich getrennt von der Abtasteinheit 3 anzuordnen und mittels lichtleitender Fasern mit der Abtasteinheit 3 zu verbinden.

Zur Erläuterung des Funktionsprinzips der erfindungsgemäßen Vorrichtung wird nunmehr nachfolgend der Abtaststrahlengang im ersten Ausführungsbeispiel erläutert, über den mehrere phasenverschobene Abstandssignale S0, S120, S240 bzgl. des Abstands zP bzw. bzgl. Änderungen des Abstands zP zwischen den beiden Platten 1, 2 erzeugt werden.

Das von einer Lichtquelle 3.1 in der Abtasteinheit 3 emittierte Strahlenbündel trifft, um einen Winkel $\Theta$ geneigt gegenüber der optischen Achse A, auf ein Strahlteilerelement 1.2 auf der ersten Platte 1. Als Lichtquelle 3.1 dient vorzugsweise ein Laser, der ein linear polarisiertes Strahlenbündel emittiert. Das Strahlteilerelement 1.2 ist im vorliegenden Beispiel als planare Strahlteilerschicht ausgebildet, die auf derjenigen Seite der ersten Platte 1 angeordnet ist, die abgewandt zur Lichtquelle 3.1 orientiert ist; diese Seite sei im folgenden auch als Oberseite der ersten Platte 1 bezeichnet. Über das Strahlteilerelement 1.2 erfährt das von der Lichtquelle 3.1 her einfallende Strahlenbündel eine Aufteilung in zwei Teilstrahlenbündel, von denen eines reflektiert und ein anderes transmittiert wird. Das reflektierte Teilstrahlenbündel wird nachfolgend als Referenzstrahlenbündel R bezeichnet, das transmittierte Strahlenbündel als Messstrahlenbündel M. Es sei darauf hingewiesen, dass die Bezeichnung der beiden aufgespaltenen Strahlenbündel als Mess- und Referenzstrahlenbündel M, R willkürlich ist und selbstverständlich die Bezeichnungen auch anders herum gewählt werden könnten.

Das Messstrahlenbündel M trifft nachfolgend auf die zur ersten Platte 1 nominal parallele zweite Platte 2. Auf der der ersten Platte 1 zugewandten Seite der zweiten Platte 2, nachfolgend auch als Unterseite der zweiten Platte 2 bezeichnet, ist ein Reflektorelement 2.2 angeordnet. Das Reflektorelement 2.2 ist als planare Spiegelschicht ausgebildet, deren reflektierende Seite in Richtung der ersten Platte 1 orientiert ist. Am Reflektorelement 2.2 erfährt das Messstrahlenbündel M eine erste Rückreflexion in Richtung der ersten Platte 1. Das Messstrahlenbündel M durchtritt dann die erste Platte 1 in einem transparenten, optisch unwirksamen Bereich, durchläuft ein polarisationsoptisches Element 3.2b, ausgebildet als $\lambda/8$-Plättchen, und gelangt dann auf eine Abtastplatte 3.3 in der Abtasteinheit 3. In der Abtastplatte 3.3 sind über die darauf angeordneten optischen Elemente verschiedene optische Funktionen implementiert, die auf das Messstrahlenbündel M beim Durchlaufen der Abtastplatte 3.3 bestimmte optische Wirkungen ausüben. So durchläuft das Messstrahlenbündel M hierbei ein erstes Ablenkelement, einen zugeordneten Retroreflektor sowie ein viertes Ablenkelement, bevor es wieder in Richtung der beiden Platten 1, 2 propagiert.

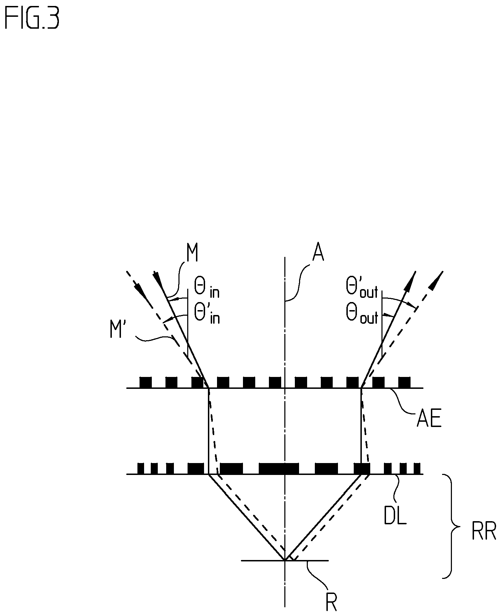

Zur näheren Erläuterung der verschiedenen optischen Wirkungen auf das Messstrahlenbündel M beim Durchlaufen der Abtastplatte 3.3 sei auf die Figur 3 verwiesen. Das aus Richtung der beiden Platten 1, 2 her einfallende Messstrahlenbündel M durchläuft zunächst ein Ablenkelement AE, das als Gitter ausgebildet ist. Hierbei wird das unter dem Einfallswinkel $\Theta_{in}$ zur optischen Achse A einfallende Messstrahlenbündel M durch das Ablenkelement AE derart abgelenkt, dass es nach dem Durchlaufen desselbigen parallel zur optischen Achse A in Richtung eines Retroreflektors RR weiterpropagiert. Der Retroreflektor RR besteht im dargestellten Beispiel aus einer diffraktiven Linse DL und einem Reflektorelement R, ausgebildet als Spiegelschicht; vorzugsweise sind die diffraktive Linse DL und das Reflektorelement R auf den entgegengesetzten Seiten eines plattenförmigen, transparenten Trägerelements angeordnet. Von der diffraktiven Linse DL wird das Messstrahlenbündel M auf das Reflektorelement R fokussiert; vom Reflektorelement R aus resultiert eine Rückreflexion in Richtung der diffraktiven Linse DL, die das ausfallende Messstrahlenbündel M wieder kollimiert, ehe es erneut auf das Ablenkelement AE trifft. Vom Ablenkelement AE wird das Messstrahlenbündel M beim Durchlaufen desselbigen schließlich entgegengesetzt zur ersten Ablenkung abgelenkt, nämlich unter dem Ausfallswinkel $\Theta_{out}$ weg von der optischen Achse A, wobei $\Theta_{in} = \Theta_{out}$ gilt.

Es sei an dieser Stelle darauf hingewiesen, dass etwa das Ablenkelement AE und/oder auch die diffraktive Linse DL des Retroreflektors RR grundsätzlich auch mehrteilig ausgebildet werden können, also z.B. jeweils nur im Bereich des ein- und ausfallenden Messstrahlenbündels M.

Bei einer kleinen Änderung des Einfallwinkels $\Theta'_{in}$ des Messstrahlenbündels M' - etwa aufgrund einer Verkippung der beiden Platten 1, 2 - hin zu einem etwas flacheren Einfallswinkel $\Theta'_{in}$ wird der Ausfallswinkel $\Theta'_{out}$ des Messstrahlenbündels M' nach dem Ablenkelement AE etwas steiler. Die in Figur 3 dargestellte Anordnung, bestehend aus Ablenkelement AE und Retroreflektor RR, unterscheidet sich daher von einer einfachen Spiegelreflexion, die einen flacheren Einfallswinkel auch in einen flacheren Ausfallswinkel umsetzten würde. Betrachtet man eine kleine Winkeländerung $\delta\Theta_{in} = \Theta'_{in} - \Theta_{in}$ des darauf einfallenden Messstrahlenbündels M', so wird diese in eine entgegengesetzte Winkeländerung $\delta\Theta_{out} = \Theta'_{out} - \Theta_{out} = -\delta\Theta_{in}$ umgesetzt, was der typischen optischen Eigenschaft eines Retroreflektors entspricht. Das heißt, die Kombination aus Ablenkelement AE und Retroreflektor RR lenkt das einfallende Messstrahlenbündel M' in eine andere, beliebig wählbare Richtung ab, wobei davon leicht abweichende Winkeländerungen des einfallenden Messstrahlenbündels M' stets in entgegengesetzte Winkeländerungen des ausfallenden Messstrahlenbündels M' umgesetzt werden.

Zu beachten ist dabei ferner, dass das Ablenkelement AE beim ersten und zweiten Durchgang das Messstrahlenbündel M, M' unterschiedlich ablenkt. So wird wie aus Figur 3 ersichtlich das einfallende Messstrahlenbündel M, M' in +1. Beugungsordnung abgelenkt, das ausfallende Messstrahlenbündel M aber in -1. Beugungsordnung.

Alternativ zur dargestellten Anordnung in Figur 3 mit getrenntem Ablenkelement AE und diffraktiver Linse DL kann in einer besonders vorteilhaften Variante vorgesehen werden, diese beiden Elemente AE, DL bzw. deren optische Funktionalität in einem einzigen diffraktiven Element zu kombinieren. Ein solches Element sei nachfolgend als kombiniertes, diffraktives Ablenk-Linsenelement bezeichnet und ist konkret im ersten Ausführungsbeispiel der erfindungsgemäßen Vorrichtung in den Figuren 1a, 1b so vorgesehen. Vorzugsweise wird das kombinierte diffraktive Ablenk-Linsenelement auf einer Seite eines plattenförmigen, transparenten Trägerelements angeordnet, auf der entgegengesetzten Seite das Reflektorelement, wobei dessen reflektierende Seite in Richtung der anderen Seite orientiert ist.

Im ersten Ausführungsbeispiel der erfindungsgemäßen Vorrichtung ist demzufolge auf der Seite der Abtastplatte 3.3, die den beiden Platten 1, 2 zugewandt ist, ein zweites kombiniertes, diffraktives Ablenk-Linsenelement 3.4b angeordnet. Dieses lenkt das Messstrahlenbündel M über die entsprechende optische Ablenkfunktion parallel zur optischen Achse A ab und fokussiert es gleichzeitig über seine optische Linsenfunktion auf ein Reflektorelement 3.5 auf der gegenüberliegenden Seite der Abtastplatte 3.3. Dort trifft das Messstrahlenbündel M im Bereich der optischen Achse A auf das Reflektorelement 3.5, wird hiervon reflektiert und gelangt auf ein drittes kombiniertes, diffraktives Ablenk-Linsenelement 3.4c. Über das dritte kombinierte, diffraktive Ablenk-Linsenelement 3.4c und dessen optischer Linsenfunktion resultiert eine Kollimation des Messstrahlenbündels M, über die optische Ablenkfunktion des dritten kombinierten, diffraktiven Ablenk-Linsenelements 3.4c eine Ablenkung des Messstrahlenbündels M hin zur optischen Achse A unter dem Winkel $\Theta$. Anschließend durchtritt das in Richtung der beiden Platten 1, 2 propagierende Messstrahlenbündel M zunächst ein weiteres polarisationsoptisches Element 3.2c, wiederum ausgebildet als $\lambda/8$-

Plättchen, durchläuft dann einen transparenten Bereich der Platte 1 und trifft schließlich wieder auf das Reflektorelement 2.2 auf der zweiten Platte 2. Dort erfährt es dann eine zweite Rückreflexion, durchtritt sodann ein weiteres Strahlteilerelement 1.3 auf der ersten Platte 1 und propagiert in Richtung einer Detektionseinheit 4.

Das am Strahlteilerelement 1.2 der ersten Platte 1 erzeugte Referenzstrahlenbündel R wird in Richtung der Abtasteinheit 3 zurückreflektiert und durchläuft dort ein polarisationsoptisches Element 3.2a in Form eines $\lambda/8$-Plättchens und gelangt auf ein erstes kombiniertes, diffraktives Ablenk-Linsenelement 3.4a, welches auf der gleichen Seite der Abtastplatte 3.3 angeordnet ist, wie das zweite, vom Messstrahlenbündel M durchlaufene kombinierte, diffraktive Ablenk-Linsenelement 3.4b. Auf das Referenzstrahlenbündel R übt das erste kombinierte, diffraktive Ablenk-Linsenelement 3.4a eine grundsätzlich vergleichbare optische Funktion aus wie das zweite kombinierte, diffraktive Ablenk-Linsenelement 3.4b auf das Messstrahlenbündel M. Das bedeutet, dass über die optische Ablenkfunktion des ersten kombinierten, diffraktiven Ablenk-Linsenelements 3.4a das Referenzteilstrahlenbündel R parallel zur optischen Achse A ausgerichtet wird, während es über dessen optische Linsenfunktion über das Reflektorelement 3.5 im Bereich der optischen Achse A auf das Reflektorelement 3.6 fokussiert wird, das auf der Seite der Abtastplatte 3.3 angeordnet ist, die den beiden Platten 1, 2 zugewandt ist. Vom Reflektorelement 3.6 gelangt das Referenzstrahlenbündel R sodann über eine weitere Reflexion am Reflektorelement 3.5 auf das vierte kombinierte, diffraktive Ablenk-Linsenelement 3.4d. Dieses kollimiert das Referenzstrahlenbündel R wieder und lenkt es ebenfalls unter einen Winkel $\Theta$ zur optischen Achse A hin ab. Das Referenzstrahlenbündel R durchläuft somit ein erstes Ablenkelement, einen zugeordneten Retroreflektor sowie ein viertes Ablenkelement, bevor es wieder in Richtung der beiden Platten 1, 2 propagiert. Nach dem Durchlaufen eines als $\lambda/8$ ausgebildeten polarisationsoptischen Elements 3.2d gelangt das Referenzstrahlenbündel R dann auf das Strahlteilerelement 1.3 auf der ersten Platte 1, wo es mit dem ebenfalls dort eintreffenden Messstrahlenbündel M überlagert wird und nach einer weiteren Reflexion in Richtung der Detektionseinheit 4 propagiert.

Über die symmetrische Ausgestaltung der ersten und vierten kombinierten, diffraktiven Ablenk-Linsenelemente 3.4a, 3.4d sowie der zweiten und dritten kombinierten, diffraktiven Ablenk-Linsenelemente 3.4b, 3.4c relativ zur optischen Achse A und den Fokusorten jeweils auf der optischen Achse A wird gewährleistet, dass das Mess- und das Referenzstrahlenbündel M, R am gleichen Ort am Strahlteilerelement 1.3 der ersten Platte 1 auftreffen und dann kollinear zur Detektionseinheit 4 propagieren.

Der längere optische Weg, den das Referenzstrahlenbündel R im vorliegenden Ausführungsbeispiel in der Abtastplatte 3.3 aufgrund der zusätzlichen Reflexion am Reflektorelement 3.6 durchläuft, wird vorzugsweise so gewählt, dass er in der Nennlage der Platten 1, 2 gleich dem zusätzlichen optischen Weg des Messstrahlenbündels M zwischen den Platten 1, 2 ist. Die optischen Weglängen der beiden Strahlenbündel sind damit in der Nennlage kompensierbar. Daraus resultiert ein besonders geringes Positionsrauschen, da das Phasenrauschen der Lichtquelle 3.1 in dieser Nennlage keinen Einfluss mehr hat. Zudem ist eine Lichtquelle 3.1 mit einer kurzen Kohärenzlänge einsetzbar, was Störungen durch ungewollte Störreflexe (z.B. durch "Speckle-Bildung" an Gehäusewänden) wesentlich verringert.

Zur Erzeugung phasenverschobener Abstandssignale S0, S120, S240 werden das Mess- und Referenzstrahlenbündel M, R durch entsprechend orientierte polarisationsoptische Bauelemente 3.2a - 3.2d, jeweils ausgebildet als λ/8-Plättchen, zueinander entgegengesetzt zirkular polarisiert. Ein Aufspaltgitter 4.1 in der Detektionseinheit 4 spaltet die beiden kollinearen Mess- und Referenzstrahlenbündel M, R jeweils in drei weitere Teilstrahlenbündel auf. Diese durchlaufen jeweils Polarisatoren 4.2a, 4.2b, 4.2c bevor sie durch optoelektronische Detektorelemente 4.3a, 4.3b, 4.3c in phasenverschobene, elektrische Abstandssignale S0, S120, S240 umgewandelt werden. Die Polarisatoren 4.2a, 4.2b, 4.2c sind zueinander im Winkel von 60° orientiert, so dass sich eine Phasenverschiebung von jeweils 120° zwischen den erzeugten Abstandssignalen S0, S120, S240 ergibt.

Im dargestellten ersten Ausführungsbeispiel verlaufen alle Strahlenbündel von der Lichtquelle 3.1 bis zur Detektionseinheit 4 in einer Ebene, nämlich in der in Fig. 1a dargestellten XZ-Ebene. Der effektive Messpunkt für jede der beiden Platten 1, 2 liegt aus Symmetriegründen auf der optischen Achse A zwischen den Auftreffpunkten der entsprechenden Teilstrahlenbündel M, R. Wie in den Figuren 1a und 1b dargestellt, liegt der effektive Messpunkt für die zweite Platte am Ort 2.1 auf der Unterseite der Platte 2; für die erste Platte 1 liegt der effektive Messpunkt am Ort 1.1 auf der Oberseite der Platte 1. Die Messpunkte 1.1, 2.1 bleiben auch bei einer z-Verschiebung der ersten Platte 1 auf der optischen Achse A liegend.

Mittels einer zusätzlichen optischen Positionsmesseinrichtung, die in den Figuren 1a, 1b nicht dargestellt ist, kann - wie bereits oben erwähnt - auch eine laterale Verschiebung der beiden Platten 1, 2 in der xy-Ebene zueinander erfasst werden. Beide Platten 1, 2 können dazu an den Messpunkten 1.1, 2.1 Gitterstrukturen aufweisen, die von einem geeigneten Abtastkopf abgetastet werden. Der Abtastkopf einer Abtastoptik, wie z.B. aus der DE 10 2010 043 263 bekannt, ist in der Abtasteinheit 3 vorzugsweise in der Nähe der optischen Achse A angeordnet und weist ebenfalls effektive Messpunkte an den Orten 1.1, 2.1. auf. Gemeinsame Messpunkte 1.1, 2.1 der erfindungsgemäßen Vorrichtung zur interferometrischen Abstandsbestimmung und einer zusätzlichen optischen Positionsmesseinrichtung erlauben eine besonders günstige Auswertung der erzeugten Abstandssignale mit einer einfachen Bestimmung mehrerer Freiheitsgrade. Drei derartige Systeme, jeweils bestehend aus der erfindungsgemäßen Vorrichtung zur interferometrischen Abstandsbestimmung und einer zusätzlichen optischen Positionsmesseinrichtung, liefern dann die sog. 6D-Pose der beiden Platten 1, 2 relativ zueinander. Die 6D-Pose kann dazu verwendet werden, die Relativlage der Platten 1, 2 oder jeweils damit verbundener Maschinenteile an der Stelle eines Tool Center Points (TCP) zu berechnen, eventuelle Abbe-Fehler werden dadurch korrigierbar.

Die zulässigen Verschiebungen der Platten 1, 2 in der xy-Ebene werden durch die laterale Ausdehnung des Reflektorelements 2.2 auf der zweiten Platte 2 bzw. den lateralen Ausdehnungen der Strahlteilerelemente 1.2, 1.3 auf der ersten Platte 1 begrenzt. Im dargestellten ersten Ausführungsbeispiel der Figuren 1a, 1b ist etwa die Spiegelschicht des Reflektorelements 2.2 auf der zweiten Platte 2 über die gesamte Unterseite der Platte 2 ausgedehnt angeordnet, so dass deren Verschiebebereich nur durch die Abmessungen der Platte 2 begrenzt werden. Die Strahlteilerschicht der Strahlteilerelemente 1.2, 1.3 auf der Oberseite der ersten Platte 1 dagegen ist jeweils nur streifenförmig entlang der y-Richtung ausgedehnt, so dass sie in x-Richtung nur geringfügig, in y-Richtung aber in weiten Bereichen verschiebbar ist. Natürlich können die Strahlteilerschichten der Strahlteilerelemente 1.2, 1.3 jeweils auch flächig auf der Oberseite der ersten Platte 1 aufgebracht werden, um derart maximal große Verschiebebereiche zu ermöglichen. Es können dann zwar Mehrfachreflexionen an den beiden Platten 1, 2 entstehen, entsprechende Strahlenbündel aus dem Mess- und/oder Referenzstrahlenbündel M, R gelangen aber aufgrund der gewählten Strahlneigung (Winkel Θ), unter dem das Strahlenbündel von der Lichtquelle 3.1 kommend auf die erste Platte einfällt, und des damit einhergehenden, großen lateralen Strahlversatzes nicht auf die Detektionseinheit 4. Der in Figur 1a ersichtliche Strahlversatz Δx zwischen den Auftreffpunkten des Mess- und Referenzstrahlenbündels M, R auf der Oberseite der ersten Platte 1 muss dazu größer als die laterale Strahlausdehnung sein. Daraus ergibt sich eine Bedingung für den minimal erforderlichen Einfallswinkel Θ, unter dem das von der Lichtquelle 3.1 emittierte Strahlenbündel geneigt auf die erste Platte 1 einfällt:

$$\tan(\Theta) > \frac{rS}{zP}, \qquad \text{(Gl. 1)}$$

mit:

Θ := Winkel gegen eine Senkrechte auf die erste Platte, unter dem das von der Lichtquelle emittierte Strahlenbündel auf die erste Platte einfällt

rS := Strahlradius der Lichtquelle

zP := Abstand der ersten und zweiten Platte

Die Einhaltung der Bedingung gemäß Gleichung 1 ist auch dann notwendig, wenn die Strahlteilerschichten der Strahlteilerelemente 1.2, 1.3 lateral begrenzt sind, da auch in diesem Fall schwache Mehrfachreflexionen an den Oberflächen der Platten 1, 2 unvermeidlich sind, die in keinem Fall in die Detektionseinheit 4 gelangen dürfen.

Es erweist sich darüberhinaus als vorteilhaft, wenn neben der Einhaltung der Bedingung aus Gleichung 1 die erste Platte 1 auf der Oberseite außerhalb der Bereiche mit den Strahlteilerelementen 1.2, 1.3 und auf der gesamten Unterseite mit einer Antireflexionsschicht versehen ist. Weiterhin vorteilhaft ist auch die Anordnung einer - in den Figuren nicht dargestellten - Blende vor der Detektionseinheit 4 bzw. in dem Bereich, in dem die kollinear überlagerten Mess- und Referenzstrahlenbündel M, R in Richtung der Detektionseinheit 4 propagieren, um derart Störreflexe zu unterdrücken. Günstig ist es außerdem, die erste Platte 1 leicht keilförmig auszuführen, um Interferenzen mit Mehrfachreflexen innerhalb dieser Platte 1 zu vermeiden.

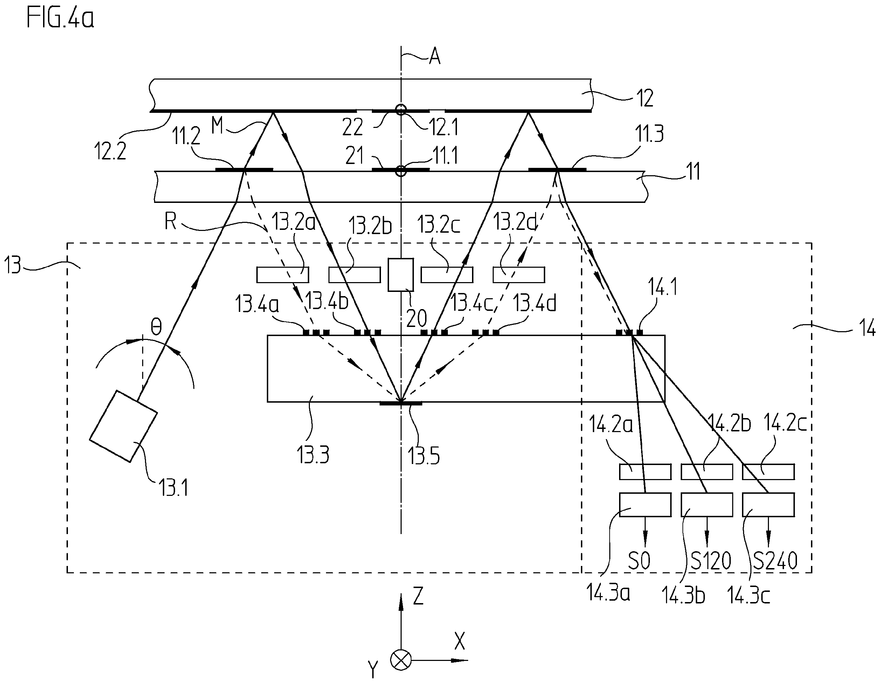

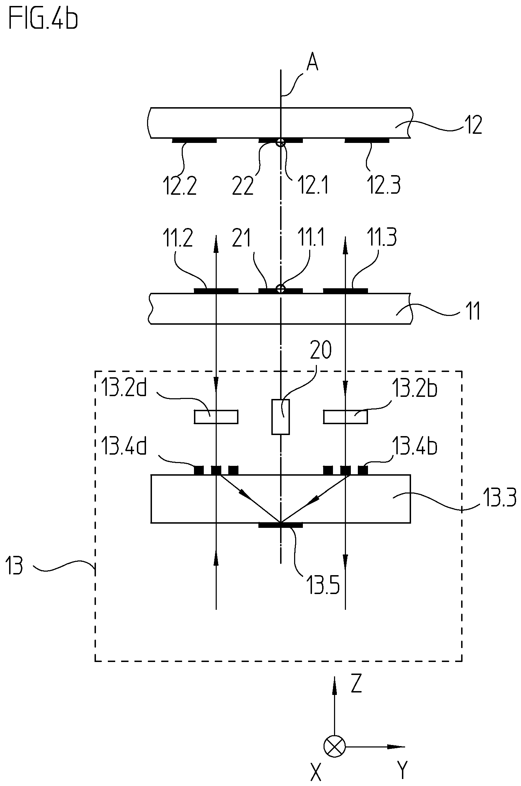

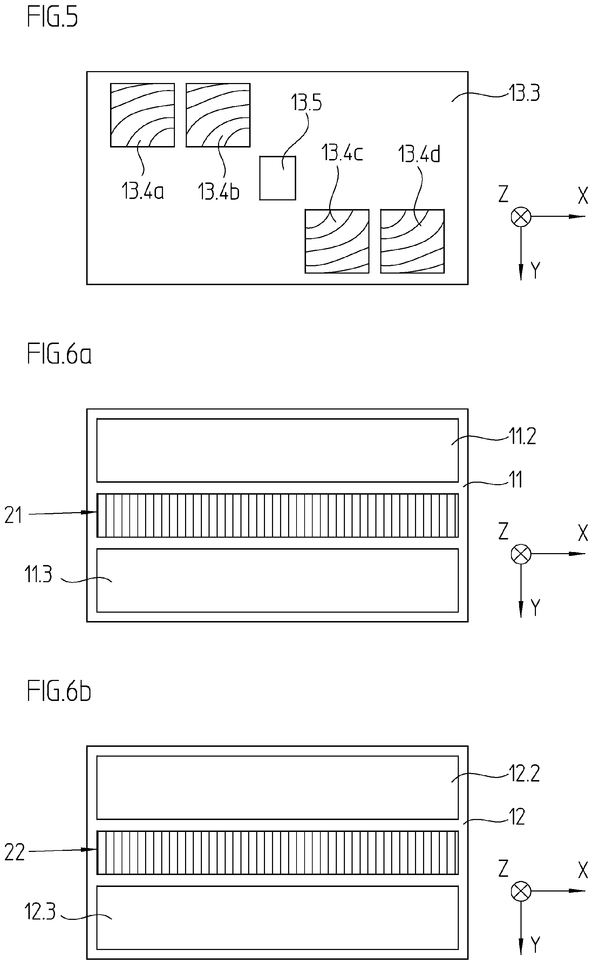

Ein zweites Ausführungsbeispiel der erfindungsgemäßen Vorrichtung wird nachfolgend anhand der Figuren 4a, 4b, 5 sowie 6a und 6b beschrieben, wobei lediglich auf die maßgeblichen Unterschiede zum ersten Beispiel eingegangen wird. Die Figuren 4a, 4b zeigen analog zum ersten Ausführungsbeispiel in schematisierter Form den Strahlengang bzw. Teile davon in verschiedenen Ansichten, Figur 5 eine Draufsicht auf die Oberseite der Abtastplatte und die Figuren 6a und 6b Ansichten der ersten und zweiten Platte der erfindungsgemäßen Vorrichtung.

Das zweite Ausführungsbeispiel einer erfindungsgemäßen Vorrichtung unterscheidet sich von der ersten Ausführungsform primär dadurch, dass der Strahlengang von der Lichtquelle 13.1 bis zur Detektionseinheit 14 nun nicht mehr vollständig in einer Ebene verläuft, wie dies im ersten Beispiel in der xz-Ebene der Fall war.

Die Lichtquelle 13.1 ist in dieser Ausführungsform in y-Richtung versetzt zur optischen Achse A angeordnet und sendet ein Strahlenbündel unter dem Neigungswinkel $\Theta$ zur optischen Achse A parallel zur xz-Ebene aus. Im weiteren Strahlenverlauf treffen das Referenzstrahlenbündel R und das Messstrahlenbündel M in y-Richtung versetzt auf die zugeordneten ersten und zweiten kombinierten, diffraktiven Ablenk-Linsenelemente 13.4a, 13.4b auf der Oberseite der Abtastplatte 13.3 in der Abtasteinheit 13 auf. Deren Linsenfunktionen sind in dieser Ausführungsform so gewählt, dass sowohl des Referenzstrahlenbündel R als auch das Messstrahlenbündel M auf das Reflektorelement 13.5 auf der Unterseite der Abtastplatte 13.3 fokussiert werden, lateral gesehen liegt der Fokusort wieder auf der optischen Achse A. Symmetrisch zur optischen Achse A sind wiederum die dritten und vierten kombinierten, diffraktiven Ablenk-Linsenelemente 13.4c, 13.4d S ausgebildet. Aufgrund des gewählten y-Versatzes der Lichtquelle 13.1 ist die optische Weglänge des Referenzstrahlenbündels R in der Abtastplatte 13.3 erheblich länger als die des Messstrahlenbündels M. Eine geeignete Dimensionierung der Dicke der Abtastplatte 13.3 erlaubt es in diesem Ausführungsbeispiel, die zusätzlich zurückgelegte optische Weglänge des Messstrahlenbündels M zwischen den beiden Platten 1, 2 auszugleichen, so dass in deren Nennlage die optischen Weglängen wiederum ausgeglichen sind. Im Gegensatz zur ersten Ausführungsform ist hier kein zusätzliches Reflektorelement auf der Oberseite der Abtastplatte 13.3 erforderlich.

Als weitere Konsequenz des nicht mehr ausschließlich in der in der xz-Ebene verlaufenden Strahlengangs sind im zweiten Ausführungsbeispiel auf der Unterseite der zweiten Platte 12 nunmehr - wie insbesondere aus den Figuren 4a und 6a ersichtlich - zwei in y-Richtung beabstandete Reflektorelemente 12.2, 12.3 angeordnet, wiederum ausgebildet als planare Strahlteilerschichten. Über diese Reflektorelemente 12.2, 12.3 erfolgt die erste und zweite Rückreflexion des Messstrahlenbündels M von der zweiten Platte 12.

Aufgrund des vorgesehenen y-Versatzes der Lichtquelle 13.1 und der meisten weiteren optischen Komponenten (13.4a - 13.4d, 13.2a - 13.2d, 14) resultiert in dieser Ausführungsform der erfindungsgemäßen Vorrichtung mehr verfügbarer Platz im Bereich der optischen Achse A, um dort z.B. eine optische Positionsmesseinrichtung zur Bestimmung der lateralen Lage der Platten 1, 2 zu integrieren.

In den Figuren 4a, 4b sowie 6a, 6b sind stark schematisiert Komponenten einer derartigen optischen Positionsmesseinrichtung dargestellt. Hierzu gehört ein der Abtasteinheit 13 zugeordneter Abtastkopf 20 sowie eine erste Maßverkörperung 21 auf der ersten Platte 11 und eine zweite Maßverkörperung 22 auf der zweiten Platte 12. Die erste Maßverkörperung 21 ist hierbei mittig zwischen den beiden Strahlteilerelementen 11.2, 11.3 der ersten Platte 11 angeordnet, die zweite Maßverkörperung 22 mittig zwischen den beiden Reflektorelementen 12.2, 12.3 der zweiten Platte 12. Der Abtastkopf 20 kann etwa eine Lichtquelle und eine Detektoreinheit umfassen; als erste und zweite Maßverkörperung 21, 22 ist jeweils eine sich in x-Richtung erstreckende Inkrementalteilung vorgesehen.

Neben den beiden konkret erläuterten Ausführungsbeispielen gibt es selbstverständlich noch weitere Möglichkeiten, die erfindungsgemäße Vorrichtung zur interferometrischen Abstandsbestimmung alternativ auszugestalten.

So ist es möglich, anstelle der in den beiden Ausführungsbeispielen vorgesehenen kombinierten, diffraktiven Ablenk-Linsenelemente auch jeweils ein hintereinander angeordnetes Ablenkelement und eine Linse vorzusehen, um darüber die erforderliche optische Ablenk- und Fokussierungswirkung auf die durchlaufenden Strahlenbündel zu erzielen.

Als Ablenkelemente können etwa Gitter, Prismen oder Spiegel dienen, die Linsen können diffraktiv oder refraktiv ausgeführt sein.

Weiterhin ist es möglich, die Retroreflektorfunktionalität über Tripelspiegel oder Tripelprismen umzusetzen, d.h. die diffraktive oder refraktive Linse, der zugeordnete Spiegel und die nachfolgende diffraktive oder refraktive Linse könnten auch durch ein Tripelprisma oder einen Tripelspiegel ersetzt werden.

Als vorteilhaft erweist sich ferner, wenn die Kohärenzlänge der Lichtquelle so kurz gewählt wird, dass störende Mehrfachreflexionen an den beiden Platten nicht mehr interferenzfähig sind.

Desweiteren kann auch die Erzeugung phasenverschobener Abstandssignale ausgehend von zueinander orthogonal polarisierten Strahlenbündeln auf alternative Art und Weise erfolgen als in den beiden Ausführungsbeispielen beschrieben. So ist es etwa möglich, in der Detektionseinheit auch polarisierende Strahlteiler und Wellenplatten zu verwenden.

Ferner ist es im Rahmen der vorliegenden Erfindung möglich, statt zwei orthogonal polarisierte Mess- und Referenzstrahlenbündel mit Hilfe der λ/8-Plättchen zu erzeugen, die beiden interferierenden Strahlenbündel auch im Winkel zueinander leicht zu verkippen. Durch die Verkippung entsteht bei der Überlagerung in der Detektionseinheit ein Streifenmuster, das beispielsweise durch einen strukturierten Photodetektor abgetastet werden kann.

Auch andere Abtastverfahren für Streifenmuster sind in einer derartigen Variante zur Erzeugung der phasenverschobenen Abstandssignale natürlich verwendbar. So könnte die Verkippung der beiden interferierenden Strahlenbündel z.B. auch dadurch erreicht werden, indem die Ablenkwinkel der kombinierten, diffraktiven Ablenk-Linsenelemente für das Mess- und das Referenzstrahlenbündel leicht unterschiedlich gewählt werden.

Desweiteren ist es möglich, die optischen Weglängen des Mess- und Referenzstrahlenbündels auch dadurch auszugleichen, dass im Strahlengang des Referenzstrahlenbündels zwischen der ersten Platte und der Abtastplatte entsprechend dicke Glasplättchen eingefügt werden.

**Patentansprüche**

1. Vorrichtung zur interferometrischen Abstandsbestimmung zwischen zwei weitgehend parallel angeordneten Platten (1, 2; 11, 12) mit einer Lichtquelle (3.1; 13.1), mindestens einem Strahlteilerelement (1.2; 11.2), mindestens einem Reflektorelement (2.2, 3.5, 3.6; 12.1, 12.2, 13.5), mehreren Ablenkelementen, mehreren Retroreflektoren (RR) und einer Detektionseinheit (4; 14), wobei die Lichtquelle, das mindestens eine Strahlteilerelement, das mindestens eine Reflektorelement, die mehreren Ablenkelemente, die mehreren Reflektoren und die Detektoreinheit derart angeordnet sind, dass:

   - ein von der Lichtquelle (3.1; 13.1) emittiertes Strahlenbündel geneigt auf ein Strahlteilerelement (1.2; 11.2) auf der ersten Platte (1; 11) trifft und dort eine Aufteilung in ein reflektiertes Referenzstrahlenbündel (R) und ein transmittiertes Messstrahlenbündel (M) erfährt und
   - das Messstrahlenbündel (M) auf ein Reflektorelement (2.2; 12.2) auf der zweiten Platte (2) trifft und dort eine erste Rückreflexion in Richtung der ersten Platte (1) erfährt und
   - das Referenzstrahlenbündel (R) ein erstes Ablenkelement und das Messstrahlenbündel (M) ein zweites Ablenkelement durchläuft, anschließend das Referenz- und Messstrahlenbündel (R, M) jeweils einen zugeordneten Retroreflektor (RR) durchlaufen und dann das Messstrahlenbündel (M) ein drittes Ablenkelement und das Referenzstrahlenbündel (R) ein viertes Ablenkelement durchläuft, wobei sowohl das erste und zweite Ablenkelement als auch das dritte und vierte Ablenkelement jeweils unterschiedliche Ablenkwirkungen auf die durchlaufenden Referenz- und Messstrahlenbündel (R, M) ausüben und
   - das Referenzstrahlenbündel (R) dann eine Reflexion an der ersten Platte (1; 11) erfährt und
   - das Messstrahlenbündel (M) dann eine zweite Rückreflexion an einem Reflektorelement (2.2; 12.3) der zweiten Platte (2; 12) erfährt,

   so dass:

   - das Messstrahlenbündel (M) und das Referenzstrahlenbündel (R) dann kollinear in Richtung der Detektionseinheit (4; 14) propagieren, wo aus den interferierenden Mess- und Referenzstrahlenbündeln (M, R) mehrere phasenverschobene Abstandssignale (S0, S120, S240) erzeugbar sind.

2. Vorrichtung nach Anspruch 1, wobei die Retroreflektoren (RR) eine erste diffraktive Linse (DL), ein Reflektorelement (R) und eine zweite diffraktive Linse (DL) umfassen, wobei über die erste diffraktive Linse (DL) eine Fokussierung des darauf einfallenden Mess- oder Referenzstrahlenbündels (M, R) auf das Reflektorelement (R) und über die zweite diffraktive Linse (DL) eine Kollimation des vom Reflektorelement (R) reflektierten, ausfallenden Mess- oder Referenzstrahlenbündels (M, R) erfolgt.

3. Vorrichtung nach Anspruch 2, wobei die erste und zweite diffraktive Linse (DL) auf einer ersten Seite eines plattenförmigen, transparenten Trägerelements angeordnet sind und auf der gegenüberliegenden, zweiten Seite des Trägerelements das Reflektorelement (R) angeordnet ist, dessen reflektierende Seite in Richtung der ersten Seite orientiert ist.

**4.** Vorrichtung nach Anspruch 2, wobei

- das erste Ablenkelement und die erste diffraktive Linse und das vierte Ablenkelement und die zweite diffraktive Linse eines ersten Retroreflektors als erstes und viertes kombiniertes diffraktives Ablenk-Linsenelement (3.2a, 3.2d; 13.2a, 13.2d) ausgebildet sind und

- das zweite Ablenkelement und die erste diffraktive Linse und das dritte Ablenkelement und die zweite diffraktive Linse eines zweiten Retroreflektors als zweites und drittes kombiniertes diffraktives Ablenk-Linsenelement (3.2b, 3.2c; 13.2b, 13.2c) ausgebildet sind.

**5.** Vorrichtung nach Anspruch 4, wobei die kombinierten diffraktiven Ablenk-Linsenelemente (3.2a, 3.2b, 3.2c, 3.2d; 13.2a, 13.2b, 13.2c, 13.2d) auf einer ersten Seite eines plattenförmigen, transparenten Trägerelements angeordnet sind und auf der gegenüberliegenden zweiten Seite des Trägerelements das Reflektorelement (3.5; 13.5) angeordnet ist, dessen reflektierende Seite in Richtung der ersten Seite orientiert ist.

**6.** Vorrichtung nach mindestens einem der vorhergehenden Ansprüche, wobei die optischen Weglängen des Mess- und Referenzstrahlenbündels (M, R) in einer definierten Nennlage identisch sind.

**7.** Vorrichtung nach Anspruch 6, wobei zur Einstellung identischer optischer Weglängen die dem Mess- und Referenzstrahlenbündel (M, R) jeweils zugeordneten Retroreflektoren unterschiedlich ausgebildet sind.

**8.** Vorrichtung nach mindestens einem der vorhergehenden Ansprüche, wobei für den Winkel ($\Theta$), unter dem das von der Lichtquelle (3.1; 13.1) emittierte Strahlenbündel geneigt auf die erste Platte einfällt, gilt:

$$\tan(\Theta) > rS / zP,$$

mit:

$\Theta$ := Winkel gegen eine Senkrechte auf die erste Platte, unter dem das von der Lichtquelle emittierte Strahlenbündel auf die erste Platte einfällt
$rS$ := Strahlradius der Lichtquelle
$zP$ := Abstand der ersten und zweiten Platte

**9.** Vorrichtung nach mindestens einem der vorhergehenden Ansprüche, wobei die erste Platte (1; 11) als transparente Planplatte ausgebildet ist,

- auf dessen der Lichtquelle (3.1; 13.1) abgewandten Seite in einem räumlich begrenzten ersten Bereich als Strahlteilerelement (1.2; 11.2) eine planare Strahlteilerschicht angeordnet ist, auf den das von der Lichtquelle (3.1; 13.1) emittierte Strahlenbündel auftrifft und

- auf der gleichen Seite in einem räumlich begrenzten zweiten Bereich als weiteres Strahlteilerelement (1.3; 11.3) eine weitere planare Strahlteilerschicht angeordnet ist, auf den das Messstrahlenbündel (M) nach der zweiten Rückreflexion am Reflektorelement (2.2; 12.3) der zweiten Platte (2) auftrifft und auf den das Referenzstrahlenbündel (R) nach dem Durchlaufen des vierten Ablenkelements auftrifft.

**10.** Vorrichtung nach Anspruch 9, wobei die erste Platte (1; 11) auf der der Lichtquelle (3.1; 13.1) zugewandten Seite sowie auf der entgegengesetzten Seite außerhalb der Bereiche mit den Strahlteilerelementen (1.2, 1.3; 11.2, 11.3) eine Antireflexionsschicht aufweist und/oder eine Blende in dem Bereich aufweist, in dem die kollinear überlagerten Mess- und Referenzstrahlenbündel (M, R) in Richtung der Detektionseinheit (4; 14) propagieren.

**11.** Vorrichtung nach mindestens einem der vorhergehenden Ansprüche, wobei die zweite Platte (2; 12) als transparente Planplatte ausgebildet ist, auf dessen der Lichtquelle (3.1; 13.1) zugewandten Seite als Reflektorelemente (2.2; 12.2, 12.3) planare Spiegelschichten angeordnet ist, deren reflektierende Seiten in Richtung der ersten Platte (1; 11) orientiert ist.

**12.** System, bestehend aus einer Vorrichtung nach mindestens einem der vorhergehenden Ansprüche kombiniert mit einer optischen Positionsmesseinrichtung, die geeignet ist, eine Relativverschiebung der ersten und zweiten Platte (1, 2; 11, 12) parallel zu den Anordnungsebenen der beiden Platten (1, 2; 11, 12) zu erfassen.

**13.** System nach Anspruch 12, wobei die Messpunkte (1.1, 2.1; 11.1, 12.1) der optischen Positionsmesseinrichtung und der Vorrichtung zur interferometrischen Abstandsbestimmung zusammenfallen.

**Claims**

**1.** Apparatus for determining the distance between two plates (1, 2; 11, 12) that are largely arranged in parallel by interferometry, comprising a light source (3.1; 13.1), at least one beam splitter element (1.2; 11.2), at least one reflector element (2.2, 3.5, 3.6; 12.1, 12.2, 13.5), a plurality of deflection elements, a plurality of retroreflectors (RR) and a detection unit (4;

14), wherein the light source, the at least one beam splitter element, the at least one reflector element, the plurality of deflection elements, the plurality of reflectors and the detector unit are arranged in such a way that:

- a beam emitted by the light source (3.1; 13.1) strikes a beam splitter element (1.2; 11.2) on the first plate (1; 11) in inclined fashion and said beam experiences a split there into a reflected reference beam (R) and a transmitted measurement beam (M) and
- the measurement beam (M) strikes a reflector element (2.2; 12.2) on the second plate (2) and said measurement beam experiences a first return reflection there in the direction of the first plate (1) and
- the reference beam (R) passes through a first deflection element and the measurement beam (M) passes through a second deflection element, the reference and the measurement beam (R, M) subsequently each pass through an assigned retroreflector (RR) and, subsequently, the measurement beam (M) passes through a third deflection element and the reference beam (R) passes through a fourth deflection element, wherein both the first and second deflection element and also the third and fourth deflection element each exert different deflection effects on the reference and measurement beams (R, M) passing therethrough and
- the reference beam (R) then experiences a reflection at the first plate (1; 11) and
- the measurement beam (M) then experiences a second return reflection at a reflector element (2.2; 12.3) of the second plate (2; 12) such that:
- the measurement beam (M) and the reference beam (R) then propagate collinearly in the direction of the detection unit (4; 14), where a plurality of phase-shifted distance signals (S0, S120, S240) are producible from the interfering measurement and reference beams (M, R).

2. Apparatus according to Claim 1, wherein the retroreflectors (RR) comprise a first diffractive lens (DL), a reflector element (R) and a second diffractive lens (DL), wherein the first diffractive lens (DL) brings about a focusing of the measurement or reference beam (M, R), incident thereon, onto the reflector element (R) and the second diffractive lens (DL) brings about a collimation of the reflected measurement or reference beam (M, R) that was reflected by the reflector element (R).

3. Apparatus according to Claim 2, wherein the first and second diffractive lens (DL) are arranged on a first side of a planar, transparent carrier element and the reflector element (R) is arranged on the opposite,

second side of the carrier element, the reflective side of said reflector element being oriented in the direction of the first side.

4. Apparatus according to Claim 2, wherein

- the first deflection element and the first diffractive lens and the fourth deflection element and the second diffractive lens of a first retroreflector are embodied as a first and fourth combined diffractive deflection lens element (3.2a, 3.2d; 13.2a, 13.2d) and
- the second deflection element and the first diffractive lens and the third deflection element and the second diffractive lens of a second retroreflector are embodied as a second and third combined diffractive deflection lens element (3.2b, 3.2c; 13.2b, 13.2c).

5. Apparatus according to Claim 4, wherein the combined diffractive deflection lens elements (3.2a, 3.2b, 3.2c, 3.2d; 13.2a, 13.2b, 13.2c, 13.2d) are arranged on a first side of a planar, transparent carrier element and the reflector element (3.5; 13.5) is arranged on the opposite second side of the carrier element, the reflective side of said reflector element being oriented in the direction of the first side.

6. Apparatus according to at least one of the preceding claims, wherein the optical path lengths of the measurement and reference beam (M, R) are identical in a defined nominal position.

7. Apparatus according to Claim 6, wherein the retroreflectors assigned to the measurement and reference beam (M, R) in each case have different embodiments for the purposes of setting identical optical path lengths.

8. Apparatus according to at least one of the preceding claims, wherein the following applies to the angle ($\Theta$) at which the beam emitted by the light source (3.1; 13.1) is incident on the first plate in inclined fashion:

$$\tan(\Theta) > rS/zP$$

where:

$\Theta$ := angle to the perpendicular on the first plate, at which the beam emitted by the light source is incident on the first plate,
rS := beam radius of the light source, and
zP := spacing of the first and second plate.

9. Apparatus according to at least one of the preceding claims, wherein the first plate (1; 11) is embodied as a transparent plane plate,

- a planar beam splitter layer, on which the beam emitted by the light source (3.1; 13.1) strikes, being arranged as a beam splitter element (1.2; 11.2) in a spatially restricted first region on the side of said plane plate facing away from the light source (3.1; 13.1), and
- a further planar beam splitter layer, on which the measurement beam (M) strikes after the second return reflection at the reflector element (2.2; 12.3) of the second plate (2) and on which the reference beam (R) strikes after passing through the fourth deflection element, being arranged as a further beam splitter element (1.3; 11.3) in a spatially restricted second region on the same side of said plate.

10. Apparatus according to Claim 9, wherein the first plate (1; 11) has an antireflection layer on the side facing the light source (3.1; 13.1) and on the opposite side outside of the regions with the beam splitter elements (1.2, 1.3; 11.2, 11.3) and/or has a stop in the region in which the collinearly superposed measurement and reference beams (M, R) propagate in the direction of the detection unit (4; 14).

11. Apparatus according to at least one of the preceding claims, wherein the second plate (2; 12) is embodied as a transparent plane plate, planar mirror layers whose reflective sides are oriented in the direction of the first plate (1; 11) being arranged as reflector elements (2.2; 12.2, 12.3) on the side of said plane plate facing the light source (3.1; 13.1).

12. System, consisting of an apparatus according to at least one of the preceding claims in combination with an optical position measuring device that is suitable for capturing a relative displacement of the first and second plate (1, 2; 11, 12) parallel to the arrangement planes of the two plates (1, 2; 11, 12).

13. System according to Claim 12, wherein the measurement points (1.1, 2.1; 11.1, 12.1) of the optical position measuring device and of the apparatus for determining the distance by interferometry coincide.

**Revendications**

1. Arrangement de détermination interférométrique de la distance entre deux plaques (1, 2 ; 11, 12) disposées largement en parallèle, comprenant une source de lumière (3.1 ; 13.1), au moins un élément séparateur de faisceau (1.2 ; 11.2), au moins un élément réflecteur (2.2, 3.5, 3.6 ; 12.1, 12.2, 13.5), plusieurs éléments de déviation, plusieurs rétroréflecteurs (RR) et une unité de détection (4 ; 14), la source de lumière, l'au moins un élément séparateur de faisceau, l'au moins un élément réflecteur, les plusieurs éléments de déviation, les plusieurs réflecteurs et l'unité de détection étant disposés de telle sorte que :

- un faisceau de rayons émis par la source de lumière (3.1 ; 13.1) venant frapper en biais un élément séparateur de faisceau (1.2 ; 11.2) sur la première plaque (1 ; 11) et y subit une dissociation en un faisceau de rayons de référence (R) réfléchi et un faisceau de rayons de mesure (M) transmis et
- le faisceau de rayons de mesure (M) vient frapper un élément réflecteur (2.2 ; 12.2) sur la deuxième plaque (2) et y subit une première rétroréflexion en direction de la première plaque (1) et
- le faisceau de rayons de référence (R) traverse un premier élément de déviation et le faisceau de rayons de mesure (M) un deuxième élément de déviation, les faisceaux de rayons de mesure et de référence (M, R) traversent ensuite respectivement un rétroréflecteur (RR) associé et ensuite le faisceau de rayons de mesure (M) traverse un troisième élément de déviation et le faisceau de rayons de référence (R) un quatrième élément de déviation, les premier et deuxième éléments de déviation ainsi que les troisième et quatrième éléments de déviation exerçant respectivement des effets de déviation différents sur les faisceaux de rayons de mesure et de référence (M, R) traversants et
- le faisceau de rayons de référence (R) subit alors une réflexion au niveau de la première plaque (1 ; 11) et
- le faisceau de rayons de mesure (M) subit ensuite une deuxième rétroréflexion au niveau d'un élément réflecteur (2.2 ; 12.3) de la deuxième plaque (2 ; 12), de sorte que :

- le faisceau de rayons de mesure (M) et le faisceau de rayons de référence (R) se propagent alors de manière colinéaire en direction de l'unité de détection (4 ; 14) où plusieurs signaux de distance (S0, S120, S240) déphasés peuvent être générés à partir des faisceaux de rayons de mesure et de référence (M, R) interférents.

2. Arrangement selon la revendication 1, les rétroréflecteurs (RR) comportant une première lentille diffractive (DL), un élément réflecteur (R) et une deuxième lentille diffractive (DL), la première lentille diffractive (DL) effectuant une concentration, sur l'élément réflecteur (R), du faisceau de rayons de référence ou de mesure (R, M) incident sur celle-ci et la deuxième lentille diffractive (DL) effectuant une collimation du faisceau de rayons de référence ou de mesure (R, M) émergeant, réfléchi par l'élément réflecteur (R).

**3.** Arrangement selon la revendication 2, la première et la deuxième lentille diffractive (DL) étant disposées sur un premier côté d'un élément porteur transparent en forme de plaque et l'élément réflecteur (R), dont le côté réfléchissant est orienté en direction du premier côté, étant disposé sur le deuxième côté opposé de l'élément porteur.

**4.** Arrangement selon la revendication 2,

- le premier élément de déviation et la première lentille diffractive ainsi que le quatrième élément de déviation et la deuxième lentille diffractive d'un premier rétroréflecteur étant réalisés sous la forme d'un premier et quatrième élément formant lentille de déviation diffractif combiné (3.2a, 3.2d ; 13.2a, 13.2d) et
- le deuxième élément de déviation et la première lentille diffractive ainsi que le troisième élément de déviation et la deuxième lentille diffractive d'un deuxième rétroréflecteur étant réalisés sous la forme d'un deuxième et troisième élément formant lentille de déviation diffractif combiné (3.2b, 3.2c ; 13.2b, 13.2c).

**5.** Arrangement selon la revendication 4, les éléments formant lentille de déviation diffractifs combinés (3.2a, 3.2b, 3.2c, 3.2d ; 13.2a, 13.2b, 13.2c, 13.2d) étant disposés sur un premier côté d'un élément porteur transparent en forme de plaque et l'élément réflecteur (3.5 ; 13.5), dont le côté réfléchissant est orienté en direction du premier côté, étant disposé sur le deuxième côté opposé de l'élément porteur.

**6.** Arrangement selon au moins l'une des revendications précédentes, les longueurs de trajet optiques des faisceaux de rayons de mesure et de référence (M, R) étant identiques dans une position nominale définie.

**7.** Arrangement selon la revendication 6, les rétroréflecteurs respectivement associés aux faisceaux de rayons de mesure et de référence (M, R) étant de configuration différente en vue du réglage de longueurs de trajet optique identiques.

**8.** Arrangement selon au moins l'une des revendications précédentes, l'équation suivante étant vérifiée pour l'angle (θ) sous lequel le faisceau de rayons émis par la source de lumière (3.1 ; 13.1) est incident sur la première plaque en biais :

$$\tan(\theta) > rS/zP,$$

où :

θ désigne l'angle par rapport à une verticale sur la première plaque, sous lequel le faisceau de rayons émis par la source de lumière est incident sur la première plaque,
rS désigne le rayon de rayonnement de la source de lumière zP désigne la distance entre la première et la deuxième plaque.

**9.** Arrangement selon au moins l'une des revendications précédentes, la première plaque (1 ; 11) étant réalisée sous la forme d'une plaque plane transparente,

- sur le côté à l'opposé de la source de lumière (3.1 ; 13.1) de laquelle est disposée, en tant qu'élément séparateur de faisceau (1.2 ; 11.2) dans une première zone délimitée dans l'espace, une couche de séparation de faisceau plane sur laquelle vient frapper le faisceau de rayons émis par la source de lumière (3.1 ; 13.1) et
- sur le même côté est disposée, en tant qu'élément séparateur de faisceau supplémentaire (1.3 ; 11.3) dans une deuxième zone délimitée dans l'espace, une couche de séparation de faisceau plane supplémentaire sur laquelle vient frapper le faisceau de rayons de mesure (M) après la deuxième rétroréflexion au niveau de l'élément réflecteur (2.2 ; 12.3) de la deuxième plaque (2) et sur laquelle vient frapper le faisceau de rayons de référence (R) après avoir traversé le quatrième élément de déviation.

**10.** Arrangement selon la revendication 9, la première plaque (1 ; 11) possédant une couche antiréfléchissante sur le côté faisant face à la source de lumière (3.1 ; 13.1) ainsi que sur le côté opposé en-dehors des zones comportant les éléments séparateurs de faisceau (1.2, 1.3 ; 11.2, 11.3) et/ou possédant un obturateur dans la zone dans laquelle les faisceaux de rayons de mesure et de référence (M, R) superposés de manière colinéaire se propagent en direction de l'unité de détection (4 ; 14).

**11.** Arrangement selon au moins l'une des revendications précédentes, la deuxième plaque (2 ; 12) étant réalisée sous la forme d'une plaque plane transparente sur le côté faisant face à la source de lumière (3.1 ; 13.1) de laquelle sont disposées, en tant qu'éléments réflecteurs (2.2 ; 12.2, 12.3), des couches réfléchissantes planes dont les côtés réfléchissants sont orientés en direction de la première plaque (1 ; 11).

**12.** Système, constitué d'un arrangement selon au moins l'une des revendications précédentes combiné avec un dispositif de mesure de position optique, qui est adapté pour détecter un décalage relatif de la première et de la deuxième plaque (1, 2 ; 11, 12) parallèlement aux plans de disposition des deux plaques (1, 2 ; 11, 12) .

13. Système selon la revendication 12, les points de mesure (1.1, 2.1 ; 11.1, 12.1) du dispositif de mesure de position optique et de l'arrangement de détermination interférométrique de la distance étant coïncidents.

FIG.1a

EP 2 565 578 B1

FIG.1b

FIG.2

FIG.3

FIG.4a

FIG.4b

FIG.5

FIG.6a

FIG.6b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102007016774 A1
- US 4606638 A
- EP 1762828 A2
- EP 2085752 A2
- DE 102010043263